# EUROPEAN PATENT APPLICATION

(11) **EP 4 447 174 A1**
(43) Date of publication of application: **16.10.2024**
(21) Application number: 23771078.5
(22) Date of filing: 15.03.2023
(51) Int. Cl.: H01M 10/04, H01M 10/0587, H01M 10/42

(54) **JELLY-ROLL TYPE ELECTRODE ASSEMBLY, BATTERY CELL INCLUDING SAME, AND CYLINDRICAL BATTERY**

(30) Priority: 16.03.2022 KR 20220032953; 14.03.2023 KR 20230032949
(71) Applicant: LG Energy Solution, Ltd., Seoul 07335 (KR)
(72) Inventor: KIM, Sudeok, Daejeon 34122 (KR); KIM, Hyoung Kwon, Daejeon 34122 (KR); KIM, Jin Soo, Daejeon 34122 (KR)
(74) Representative: Goddar, Heinz J.
(86) International application number: PCT/KR2023/003447
(87) International publication number: WO 2023/177199

(57) **Abstract**

A jelly roll type electrode assembly according to one embodiment of the present disclosure includes a cathode sheet, an anode sheet, and a separator sheet interposed between the cathode sheet and the anode sheet, wherein a separator sheet part facing one end of the cathode sheet located an inner side of the jelly roll type electrode assembly includes a first separator sheet part facing the anode sheet and a second separator sheet part facing the cathode sheet, and wherein a friction coefficient between the first separator sheet and the anode sheet is smaller than a friction coefficient between the second separator sheet and the cathode sheet.

## Description

### [TECHNICAL FIELD]

### Cross Citation with Related Application so

This application claims the benefit of Korean Patent Application No. 10-2022-0032953 filed on March 16, 2022 and Korean Patent Application No. 10-2023-0032949 filed on March 14, 2023 in the Korean Intellectual Property Office, the entire contents of which are incorporated herein by reference.

The present disclosure relates to a jelly roll type electrode assembly, a battery cell including the same, and a cylindrical battery, and more particularly, to a jelly roll type electrode assembly in which an internal circuit is prevented, a battery cell including the same, and a cylindrical battery.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

Lithium secondary batteries are also classified into cylindrical, prismatic or pouch types depending on the shape of the exterior material in which the electrode assembly is housed. The electrode assembly is roughly classified as a jelly roll type configured to have a structure in which a long-sheet type cathode and a long-sheet type anode, to which active materials are applied, are wound in a state where a separator is disposed between the cathode and the anode, a stacked type configured to have a structure in which pluralities of cathodes and anodes having a predetermined size are sequentially stacked in a state where separators are disposed respectively between the cathodes and the anodes, and a stacked/folded type configured to have a structure in which stack type unit cells are wound with a long separation film. Of them, the jelly roll type has advantages in that it is easy to manufacture and has high energy density per weight.

Such a jelly roll type electrode assembly is manufactured by interposing a separator between a cathode and an anode and then winding it into a cylindrical shape. This winding process is performed by winding the separator and the electrode on a mandrel divided into two parts, and then removing the mandrel from the electrode assembly.

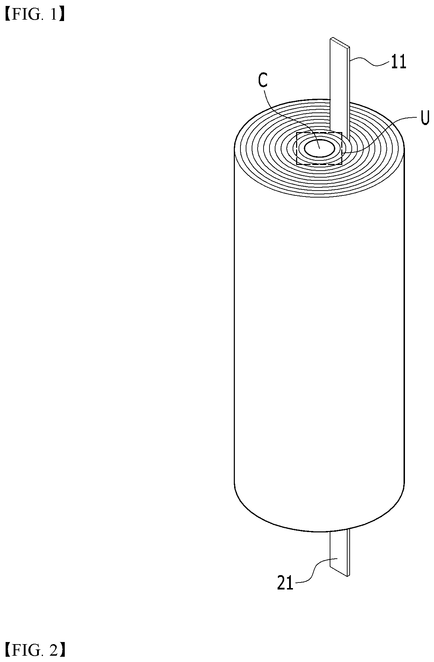

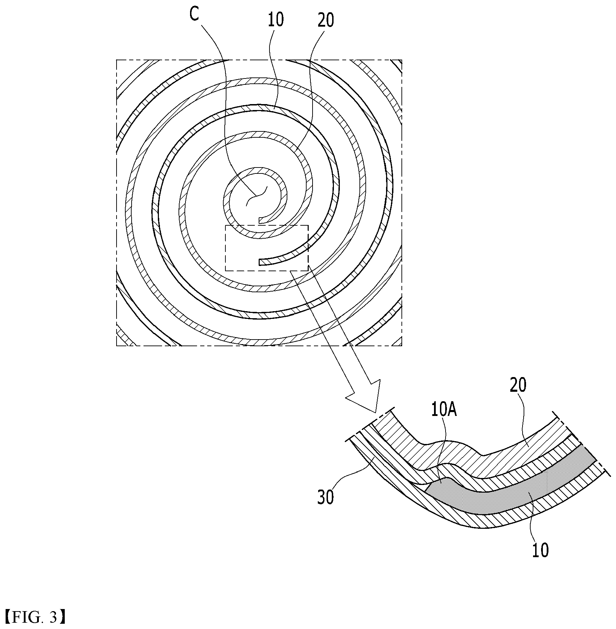

FIG. 1 is a perspective view of a conventional jelly roll type electrode assembly. FIG. 2 is an enlarged view of a section 'U' of FIG. 1. FIG. 3 is a diagram for explaining changes in electrode length in a conventional electrode assembly. Here, the partial enlarged view of FIG. 2 shows that the central part C of the electrode assembly is deformed after charging and discharging.

Referring to FIGS. 1 to 3, a conventional jelly roll type electrode assembly can be formed by winding a cathode 10 and an anode 20. A cathode tab 11 attached to the cathode 10 and an anode tab 21 attached to the anode 20 may protrude in directions facing each other in the jelly roll type electrode assembly. A separator is interposed between the cathode 10 and the anode 20 in the jelly roll electrode assembly.

The cathode 10 may have a free edge. When the cathode tab 11 is not located at the end of the cathode sheet, one end of the cathode 10 may be provided in a state of having a coating layer coated with an active material, which may be referred to as a free-edge part 10A. A step may be formed around the central part C of the electrode assembly by the free-edge part 10A. As the electrode assembly expands or contracts in charging and discharging processes of the battery cell, the periphery of the central part C of the electrode assembly can be deformed as shown in the partial enlarged view of FIG. 2.

More specifically, referring to FIG. 3, as the electrode assembly expands or contracts in charging and discharging processes of the battery cell, the electrode length may change. During this process, slippage can be restricted in accordance with a frictional force between the electrodes 10 and 20 and the separator 30, and the anode 20 facing the free-edge part 10A may cause a bending phenomenon (impingement) due to a step or the like. If such a phenomenon is repeated, the separator 30 between the cathode 10 and the anode 20 may be damaged, and may cause cracks or internal disconnection of the electrode assembly, which seriously impairs the safety of the battery cell.

### [DETAILED DESCRIPTION OF THE INVENTION]

### [Technical Problem]

It is an object of the present disclosure to provide a jelly roll type electrode assembly in which an internal disconnection problem of the electrode assembly due to changes in electrode length during charging of the battery cell is improved, a battery cell including the same, and a cylindrical battery.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a jelly roll type electrode assembly comprising a cathode sheet, an anode sheet, and a separator sheet interposed between the cathode sheet and the anode sheet, wherein a separator sheet part facing one end of the cathode sheet located on an inner side of the jelly roll type electrode assembly comprises a first separator sheet part facing the anode sheet and a second separator sheet part facing the cathode sheet, and wherein a friction coefficient between the first separator sheet and the anode sheet is smaller than a friction coefficient between the second separator sheet and the cathode sheet.

One end of the cathode sheet may be formed of a free-edge part containing an active material.

The free-edge part may comprise a portion where one end of the cathode sheet is coated with a cathode active material onto the current collector.

One end of the anode sheet may be located on the inner side of the jelly roll type electrode assembly than one end of the cathode sheet.

The jelly roll type electrode assembly further comprises a slip layer located between the first separator sheet part and the anode sheet, wherein a friction coefficient between the slip layer and the first separator sheet part or a friction coefficient between the slip layer and the anode sheet may be smaller than a friction coefficient between the second separator sheet and the cathode sheet.

One end of the cathode sheet is formed of a free-edge part containing an active material, and the slip layer may be located on the first separator sheet part covering the free-edge part.

Based on the cross section of the jelly roll type electrode assembly, the free-edge part may be located between both ends of the slip layer.

A length of the slip layer may be 10 mm to 30 mm.

The slip layer may be made of a porous material.

The jelly roll type electrode assembly may further comprise a barrier layer located so as to face the free-edge part between the separator sheet and the cathode sheet.

The barrier layer may be located on the second separator sheet part covering the free-edge part.

A friction coefficient between the barrier layer and the second separator sheet part or a friction coefficient between the barrier layer and the cathode sheet may be greater than a friction coefficient between the first separator sheet part and the anode sheet.

The jelly roll type electrode assembly may further comprise a separator overlapping part formed on the separator sheet part overlapping with one end of the cathode sheet in a direction from the outside to the inside of the jelly roll type electrode assembly.

The separator overlapping part is formed between one end of the cathode sheet and the anode sheet, and the thickness of the separator overlapping part may be formed thicker than that of the separator sheet part that does not face one end of the cathode sheet.

The separator sheet comprises a first separator sheet located on one surface of the cathode sheet and a second separator sheet located on the other surface of the cathode sheet, and the separator overlapping part may comprise one end of the first separator sheet formed by bending at least twice in the same direction so that the first separator sheet covers a cut surface of one end of the cathode sheet, and one end of the second separator sheet overlapping with one end of the first separator sheet.

One end of the second separator sheet may include a double layer by bending the end at least twice.

According to another embodiment of the present disclosure, there is provided a battery cell comprising: the jelly roll type electrode assembly, and a battery case housing the jelly roll type electrode assembly.

According to yet another embodiment of the present disclosure, there is provided a cylindrical battery comprising the above-mentioned battery cell.

### [Advantageous Effects]

According to the embodiments, the electrode assembly of the present disclosure can minimize a frictional force between the electrode and the separator, thereby preventing internal disconnection of the jelly roll type electrode assembly and improving the safety of the battery cell.

The advantageous effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view of a conventional jelly roll type electrode assembly;
FIG. 2 is an enlarged view of a section 'U' of FIG. 1;
FIG. 3 is a diagram for explaining changes in electrode length in a conventional electrode assembly;
FIG. 4 is a perspective view of an electrode assembly according to an embodiment of the present disclosure;
FIG. 5 is an exploded perspective view showing a state before the electrode assembly of FIG. 4 is wound;
FIG. 6 is a diagram showing an electrode and a separator located around a free-edge part;
FIG. 7 is a diagram showing a modified embodiment of the electrode assembly of FIG. 6;
FIG. 8 is a diagram showing another modified embodiment of the electrode assembly of FIG. 6;
FIG. 9 is a diagram showing an electrode assembly according to another embodiment of the present disclosure; and
FIG. 10 is a diagram showing an electrode assembly according to yet another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present inventive concept, portions that are irrelevant to the description are omitted, and like reference numerals designate like elements throughout the description.

Further, the size and thickness of each component shown in the drawings are arbitrarily exaggerated or reduced for better understanding and ease of description, but the present inventive concept is not limited thereto. In the drawings, the thickness of layers, regions, etc. are exaggerated in order to clearly express various layers and regions. For better understanding and ease of description, the thickness of some layers and regions is exaggerated. In addition, it will be understood that when an element such as a layer, film, region, or plate is referred to as being "on" or "above" another element, it can be directly on the other element or intervening elements may also be present. In contrast, when an element such as a layer, film, region, or plate is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

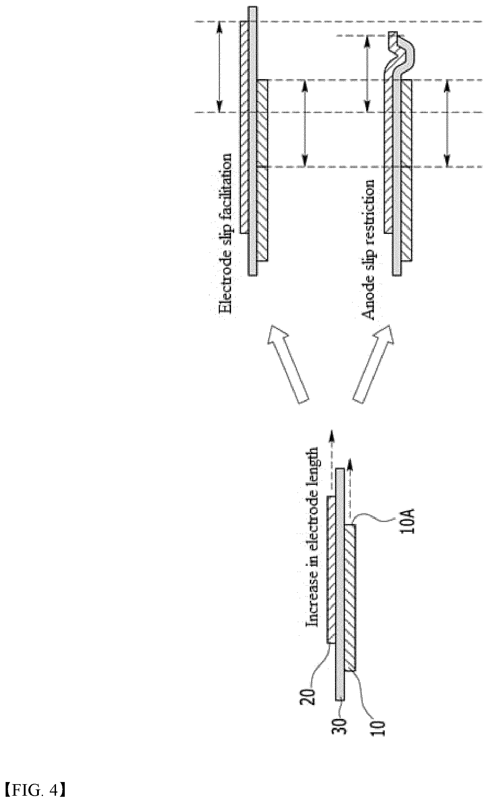

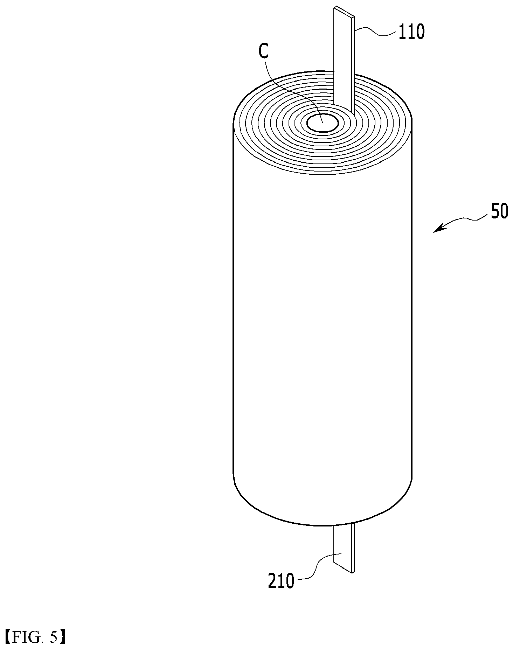

FIG. 4 is a perspective view of an electrode assembly according to an embodiment of the present disclosure. FIG. 5 is an exploded perspective view showing a state before the electrode assembly of FIG. 4 is wound.

An electrode assembly according to an embodiment of the present disclosure is described below.

Referring to FIGS. 4 and 5, the jelly roll type electrode assembly 50 of the present embodiment may include a cathode sheet 100, an anode sheet 200, and a separator sheet 300 interposed between the cathode sheet 100 and the anode sheet 200. The cathode sheet 100, the anode sheet 200 and the separator sheet 300 may be alternately stacked to form a sheet-shaped stack. The sheet-shaped stack can be wound by a long rod-shaped winding mandrel. Here, the cathode sheet 100 and the anode sheet 200 may be collectively referred to as electrode sheets 100 and 200.

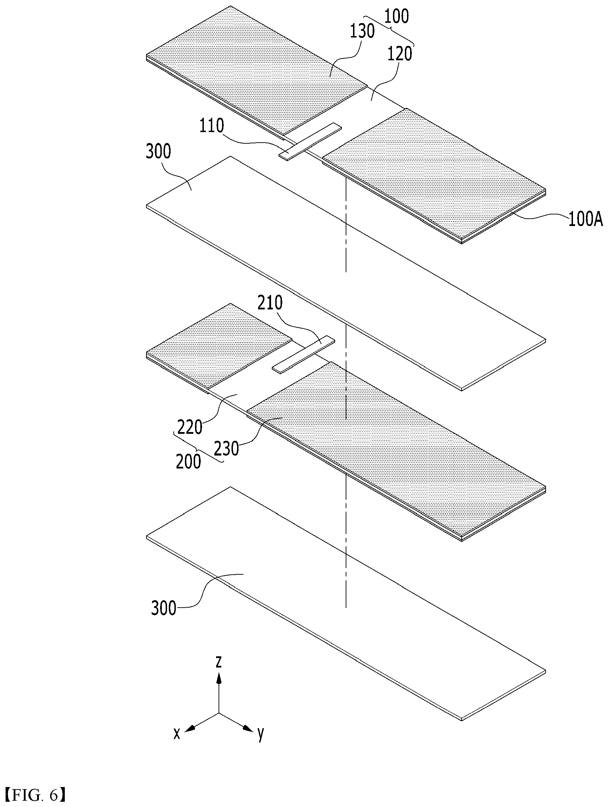

Meanwhile, at the central part C of the jelly roll type electrode assembly 50, the anode sheet 200 may be wound to extend from the cathode sheet 100. That is, after the anode sheet 200 and the separator 300 are first wound, the cathode sheet 100 may be further provided thereto and wound together. Considering the chemical reaction of a lithium ion battery, since the anode receives lithium ions of the cathode, the length and width of the anode sheet 200 may be preferably formed greater than those of the cathode sheet 100 for smooth charging and discharging. Therefore, it may be preferable that the anode sheet 200 is wound earlier than the cathode sheet 100 in the winding of the jelly roll type electrode assembly. Thereby, the anode sheet 200 is located at the innermost side of the central part C, and one end of the cathode sheet 100 may be located on an outer side (left side in FIG. 6) than the anode sheet 200. In other words, one end of the anode sheet 200 can be located closer to the central part C of the electrode assembly 50 than one end of the cathode sheet 100. The central part C of the electrode assembly 50 may be the inner side shown in FIG. 6.

One end of the anode sheet 200 may be located on the inner side of the central part C of the electrode assembly 50 than one end of the cathode sheet 100. Further, the other end of the anode sheet 200 located on the outer peripheral surface of the electrode assembly 50 may also be extensively disposed so as to cover the other end of the cathode sheet 100. Here, the central part C of the electrode assembly 50 may mean a radial central part on the basis of the cross section of the jelly roll type electrode assembly.

The electrode sheets 100 and 200 may be obtained by coating a slurry containing an electrode active material onto a current collector. The cathode sheet 100 may include a coating part 130 coated with a slurry and an uncoated part 120 not coated with a slurry, and the anode sheet 200 may include a coating part 230 coated with a slurry and an uncoated part 220 not coated with a slurry. Further, a cathode tab 110 may be located on the uncoated part 120 of the cathode sheet 100, and an anode tab 210 may be located the uncoated part 220 of the anode sheet 200. The cathode tab 110 and the anode tab 210 may protrude in directions facing each other in the height direction (x-axis direction of FIG. 5) of the electrode assembly. However, it can also be formed differently depending on the design.

Here, the electrode slurry may typically include an electrode active material, a conductive material, a binder, and a solvent, but is not limited thereto. Here, the current collector may be made of stainless steel, aluminum, copper, nickel, titanium, calcined carbon, or the like, and may be provided in various forms such as a film, a sheet, a foil, a net, a porous body, a foam, or a nonwoven fabric. Examples of the current collector used for the cathode sheet 100 include aluminum or an alloy thereof, and examples of the current collector used for the anode sheet 200 include copper, nickel, stainless steel, or an alloy of any one of these.

The separator sheet 300 can separate between the cathode sheet 100 and the anode sheet 200 and provide a moving passage of ions moving between the cathode sheet 100 and the anode sheet 200. The separator sheet 300 is a major component that determines the performance of a secondary battery. In order for the separator sheet 300 to have physical properties suitable for a secondary battery, the physical properties such as minimizing thickness to lower electrical resistance and maximizing porosity and pore size must be satisfied. In addition, electrochemical properties such as wettability with an electrolyte solution must also be satisfied.

A coating material can be coated onto one surface or both surfaces of the separator sheet 300 to form a coating layer, and heat resistance and safety of the separator sheet 300 can be improved by the coating layer. For example, a coating material including alumina (Al₂O₃) and a binder may be coated onto one surface or both surfaces of the fabric of the separator sheet 300. When the fabric is coated with highly heat-resistant alumina, the separator sheet 300 can physically interrupt contact between the cathode and the anode even in a high-temperature condition inside the battery cell such as thermal runaway, thereby preventing an internal short circuit of the battery cell.

The coating layer of the separator sheet 300 may include ceramic particles and a polymer binder. An example of the ceramic particle may be alumina, and the characteristics of the separator sheet 300 may vary depending on the diameter of the alumina. For example, the smaller the diameter of alumina, the lower the friction coefficient of the coating layer. As the diameter of alumina decreases, the surface area of the particles increases, and a relatively large number of particles can contact the fabric of the separator sheet 300, thereby improving adhesion force of the particles and suppressing deformation of the separator sheet 300. In addition, even when the coating material is repeatedly coated onto the fabric of the separator sheet 300, the thickness of the coating layer may be reduced if the particle diameter is small. Therefore, as compared with the case where the diameter of the particles is large, the air permeability of the coating layer may increase, and the ion conduction resistance of the separator sheet 300 may decrease.

It may vary depending on the coating material that forms the coating layer, but when the coating layer is formed using a coating material having a higher friction coefficient than the separator fabric, the coating layer may be formed on one surface of the separator sheet 300 facing the cathode sheet 100. Alternatively, coating layers may be formed on both surfaces of the separator sheet 300, respectively. At this time, the friction coefficient of the first coating layer formed on one surface of the separator sheet 300 facing the anode sheet 200 can be designed to be smaller than the friction coefficient of the second coating layer formed on the other surface of the separator sheet 300 facing the cathode sheet 100. In order to make the friction coefficients of the first coating layer and the second coating layer different from each other, it is possible to adjust the diameter of the ceramic particles as described above.

Meanwhile, one end of the cathode sheet 100 may have a free-edge part 100A. One end of the cathode sheet 100 may be formed of a coating part 130 instead of an uncoated part 120, and such an end part may be referred to as a free-edge part or a coated-edge part or the like. As shown in FIG. 5, according to the present embodiment, the cathode tab 110 may not be located at one end of the cathode sheet 100, but may be located at the central part. Therefore, it may be referred to as a free-edge part 100A in the sense that the cathode tab 110 is not located at one end of the cathode sheet 100 or that the uncoated part 120 for locating the cathode tab 110 is not formed. Alternatively, since one end of the cathode sheet 100 is formed of the coating part 130 and the coating layer is not cut, it may be referred to as a coated-edge part. Here, one end of the cathode sheet 100 on which the free-edge part or the coated-edge part is formed may be the core of the jelly roll type electrode assembly. Thereby, the cathode tab 110 may not be located around the central part C of the electrode assembly.

The free-edge part 100A is formed at one end of the cathode sheet 100 in this way, so that during volume expansion of the electrode assembly, a phenomenon where a part of the anode sheet facing the free-edge part is bent may appear, which may cause a problem that the separator sheet 300 is damaged. However, in the electrode assembly of the present embodiment, the above-mentioned problem can be solved by changing the level of friction between the separator sheet 300 and the electrode sheets 100 and 200.

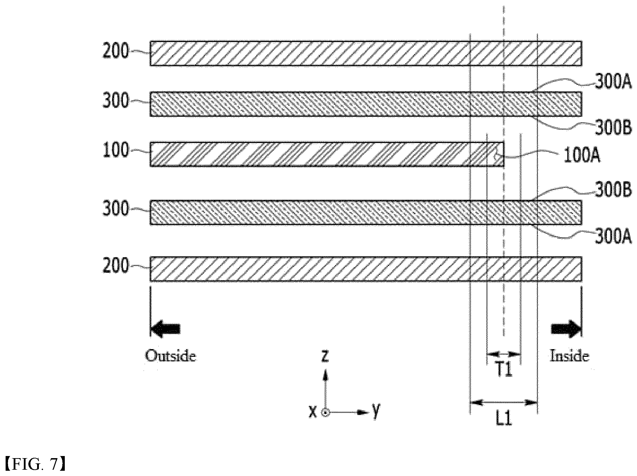

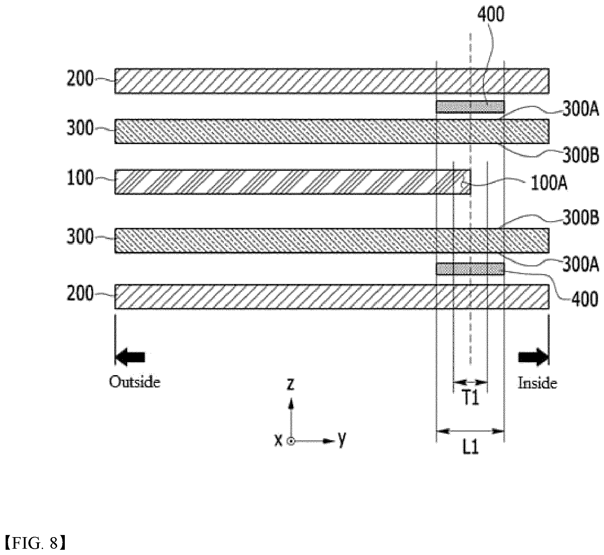

FIG. 6 is a diagram showing an electrode and a separator located around the above-mentioned free-edge part. FIG. 7 is a diagram showing a modified embodiment of the electrode assembly of FIG. 6. FIG. 8 is a diagram showing another modified embodiment of the electrode assembly of FIG. 6.

In the electrode assembly of the present embodiment according to FIG. 6, the electrode sheets 100 and 200 and the separator sheet 300 around the free-edge part 100A are in a state of being wound, but in FIG. 6, they are shown flat for convenience of explanation, and the electrode sheets 100 and 200 and the separator sheet 300 are shown in a state where they are not in close contact with each other. In FIG. 6, the anode sheet 200 disposed above and below the cathode sheet 100 may be wound earlier than or later than the cathode sheet 100 at the time of winding the electrode assembly.

Referring to FIG. 6, in the electrode assembly of the present embodiment, the separator sheet 300 may have a separator sheet part facing the free-edge part 100A corresponding to one end of the cathode sheet 100 located inside the jelly roll type electrode assembly. Here, facing the free-edge part 100A may mean overlapping each other in a direction toward the central part C of the jelly roll type electrode assembly 50 of FIG. 4. In other words, the portion of the separator sheet overlapping with the free-edge part 100A in the z-axis direction in FIGS. 5 and 6 may include a first separator sheet part facing the anode sheet 200 and a second separator sheet part facing the cathode sheet 100.

The cathode tab (110 shown in FIG. 5) according to the present embodiment is formed at a position away from the central part C of the electrode assembly 50 shown in FIG. 4 (see FIG. 5). The central part C of the electrode assembly may be located on one side of the y-axis direction where the free-edge part 100A is located in FIGS. 5 and 6. Therefore, the coating part 130 of FIG. 5 is formed on the current collector of the cathode sheet 100 up to one end of the cathode sheet 100 adjacent to the central part C of the electrode assembly, and the free-edge part 100A may refer to a portion where the coating part 130 is formed on the current collector of the cathode sheet 100 at one end of the cathode sheet 100. In other words, one end of the free-edge part 100A may have a shape in which the coating part 130 is cut.

The portion of the separator sheet corresponding to the free-edge part 100A may have a width within the first range T1 on the basis of one end edge of the cathode sheet 100. The separator sheet 300 may include a first surface 300A facing the anode sheet 200 and a second surface 300B facing the cathode sheet 100. The portion of the separator sheet 300 may include a first separator sheet part facing the anode sheet 200 and a second separator sheet part facing the cathode sheet 100. The first separator sheet part may include a first surface 300A, and the second separator sheet part may include a second surface 300B.

In the present embodiment, the friction coefficient between the first surface 300A of the first separator sheet part and the anode sheet 200 may differ from a friction coefficient between the second surface 300B of the second separator sheet part and the cathode sheet 100. Specifically, the friction coefficient between the first surface 300A of the first separator sheet and the anode sheet 200 may be smaller than a friction coefficient between the second surface 300B of the second separator sheet part and the cathode sheet 100. The friction coefficient between the anode sheet 200 and the first separator sheet part having the first surface 300A of the separator sheet 300 located around the free-edge part 100A is formed in a relatively small size in this way, thereby being able to slide between the separator sheet 300 and the anode sheet 200, and preventing a bending phenomenon of the anode sheet 200 and an internal disconnection of the electrode assembly resulting therefrom. That is, the anode sheet 200 may slide better than the cathode sheet 100 during expansion of the electrode assembly. Therefore, when the length of the electrode sheet increases while the electrode assembly expands as the battery cell is charged, it is possible to prevent a phenomenon in which the end part of the anode sheet 200 is bent.

In the present embodiment, the relative friction coefficient is adjusted differently, and thus, the size of the friction coefficient described above can be compared through a conventional friction coefficient measuring method and friction coefficient measuring apparatus.

The separator sheet 300 may be provided in various ways.

As described above, in order to relatively reduce the friction coefficient between the anode sheet 200 and the first separator sheet part having the first surface 300A of the separator sheet 300 located around the free-edge part 100A, it is also possible to adjust the surface roughness. As an example, coating layers may be formed on both surfaces of the separator sheet 300. The surface roughness of the first surface 300A and the second surface 300B may be formed differently depending on the coating layer formed on each surface. When the coating layer includes ceramic particles, the ceramic particles of the coating layer formed on the first surface 300A and the ceramic particles of the coating layer formed on the second surface 300B may have different diameters. The diameter of the ceramic particles of the coating layer formed on the first surface 300A may be smaller than the diameter of the ceramic particles of the coating layer formed on the second surface 300B.

As another example, the coating layer is formed on only one surface of the separator sheet 300, so that the surface roughness of the first surface 300A and the second surface 300B can be formed differently. When the surface roughness of the coating layer is smaller than that of the fabric of the separator sheet 300, a coating layer may be formed on the first surface 300A. When the surface roughness of the coating layer is greater than that of the fabric of the separator sheet 300, a coating layer may be formed on the second surface 300B.

As another example, a coating layer may not be formed on the separator sheet 300. The surface roughness of the first surface 300A and the second surface 300B of the separator sheet 300 may vary depending on the characteristics of the separator fabric. At this time, the first surface 300A may be a surface with relatively low surface roughness in the separator fabric, and the second surface 300B may be a surface having a relatively large surface roughness in the separator fabric.

In the present embodiment, since the relative surface roughness is adjusted differently, the size of the surface roughness described above can be compared through a conventional surface roughness measuring method and surface roughness measuring apparatus.

Referring to FIG. 7, the electrode assembly according to another embodiment of the present embodiment may be provided with a slip layer 400.

The slip layer 400 is provided between the first separator sheet part, which is the separator sheet 300 around the free-edge part 100A, and the anode sheet 200, thereby being able to induce slippage between the separator sheet 300 and the anode sheet 200. The slip layer 400 may have a friction coefficient lower than that of the separator sheet 300. Specifically, the friction coefficient between the slip layer 400 and the first separator sheet part, or the friction coefficient between the slip layer 400 and the anode sheet 200 may be smaller than the friction coefficient between the second separator sheet part and the cathode sheet 100. The slip layer 400 can be attached to the anode sheet 200 or the first separator sheet using a material that can be adhered at room temperature. When the slip layer 400 is attached to the anode sheet 200, the friction coefficient between the slip layer 400 and the first separator sheet part may be smaller than the friction coefficient between the second separator sheet part and the cathode sheet 100. When the slip layer 400 is attached to the first separator sheet, the friction coefficient between the slip layer 400 and the anode sheet 200 may be smaller than the friction coefficient between the second separator sheet part and the cathode sheet 100 .

The slip layer 400 may be made of a porous material. The slip layer 400 includes a plurality of pores, which may thus not impede the movement of lithium ions or charges between the cathode sheet 100 and the anode sheet 200. If the slip layer 400 is not made of a porous material, a short circuit problem due to a lithium precipitate may occur. Examples of materials that can be used for the slip layer 400 include polyethylene (PE), polypropylene (PP), or the like, and the material used for the fabric of the separator sheet 300 can be applied to the slip layer 400. Alternatively, the slip layer 400 can be used so as to have a ceramic coating on the fabric surface of the separator sheet 300.

The slip layer 400 may be provided around the free-edge part 100A. The slip layer 400 may be located so as to correspond to the free-edge part 100A. Here, corresponding to the free-edge part 100A may mean overlapping each other in a direction toward the central part C of the jelly roll type electrode assembly.

The slip layer 400 may be located on the first surface 300A of the separator sheet 300 covering the free-edge part 100A, which is not in contact with the free-edge part 100A.

Since the cathode sheet 100 repeats expansion or contraction according to charging and discharging of the battery cell including the electrode assembly, the slip layer 400 may be provided in consideration of the variation position of the free-edge part 100A. Specifically, as shown in FIG. 7, the position of the free-edge part 100A may be varied within a first range T1 depending on the expansion or contraction of the cathode sheet 100. At this time, the first length L1, which is the length of the slip layer 400, is provided greater than the length of the first range T 1, thereby allowing the slip layer 400 and the free-edge part 100A to correspond to each other. On the direction in which the cathode sheet 100, the anode sheet 200, or the separator sheet 300 extends, when the portion to be wound first is defined as the inside and the portion to be wound later is defined as the outside, one end of the slip layer 400 is located inside the free-edge part 100A, and the other end of the slip layer 400 may be located outside the free-edge part 100A. On the direction in which the cathode sheet 100, the anode sheet 200, or the separator sheet 300 extends, the slip layer 400 is disposed such that the free-edge part 100A is located between both ends of the slip layer 400. Based on the cross-section of the wound electrode assembly, the slip layer 400 may be disposed such that the free-edge part 100A is located between both ends of the slip layer 400. At this time, the cross section of the wound electrode assembly refers to a surface shown in FIG. 6, and may be a surface perpendicular to the central axis of the electrode assembly. Here, both ends of the slip layer 400 may be ends in the longitudinal direction, and the longitudinal direction may be a direction in which the cathode sheet 100, the anode sheet 200, or the separator sheet 300 extends.

As specific examples, the first length L1 of the slip layer 400 may range from 10 mm to 30 mm or from 15 mm to 25 mm. Alternatively, the first length L1 of the slip layer 400 may be about 20 mm. Here, the first length L1 may be calculated based on the direction in which the cathode sheet 100, the anode sheet 200, or the separator sheet 300 extends. Here, the first length L1 may be calculated based on a direction perpendicular to the height direction of the electrode assembly.

Referring to FIG. 8, the barrier layer 400' according to the present embodiment can be provided between the cathode sheet 100 and the separator sheet 300, unlike the one provided between the separator sheet 300 and the anode sheet 200 in the embodiment of FIG. 7. The barrier layer 400' is located to correspond to the free-edge part 100A, and may be located on the second separator sheet part covering the free-edge part 100A. At this time, not only the barrier layer 400' induces slippage between the separator sheet 300 and the anode sheet 200, but also the separator sheet 300 and the barrier layer 400' can be doubled between the anode sheet 200 and the cathode sheet 100 to physically prevent an internal short circuit. At this time, the friction coefficient between the barrier layer 400' and the second separator sheet part, or the friction coefficient between the barrier layer 400' and the cathode sheet 100 is preferably greater than the friction coefficient between the first separator sheet portion and the anode sheet 200. This is because an internal short circuit between the anode sheet 200 and the cathode sheet 100 can be prevented through the barrier layer 400', but the bending phenomenon of the anode sheet 200 can also be prevented, so that the effect of preventing an internal short circuit can be greatly increased.

FIG. 8 shows only the case where the barrier layer 400' is provided between the cathode sheet 100 and the separator sheet 300, but as a modified embodiment, a slip layer 400 between the anode sheet 200 and the separator sheet 300 as well as a barrier layer 400' between the cathode sheet 100 and the separator sheet 300 can be provided together, as described in FIG. 7.

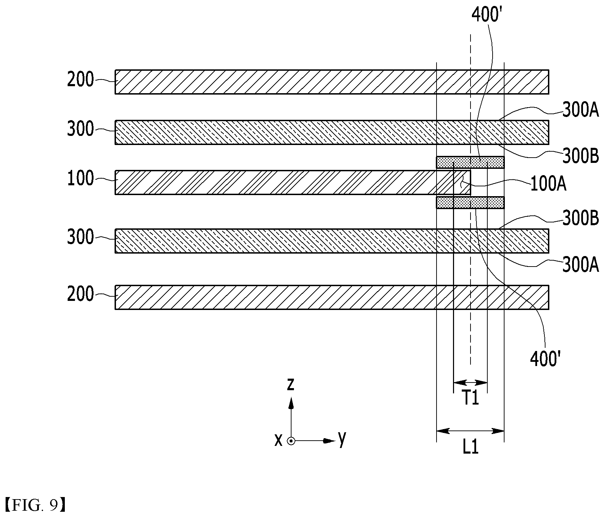

FIG. 9 is a diagram showing an electrode assembly according to another embodiment of the present disclosure.

Referring to FIG. 9, at least one of the two slip layers 400 described with reference to FIG. 7 is omitted, and a separator overlapping part 305P may be formed at a position where the slip layer 400 is omitted. The separator overlapping part 305P may be formed in a portion of the separator sheet 300 that overlaps with one end of the cathode sheet 100 in a direction from the outside to the inside (central part) of the jelly roll type electrode assembly. The separator overlapping part 305P according to the present embodiment is formed between one end of the cathode sheet 100 and the anode sheet 200, wherein the thickness of the separator overlapping part 305P may be formed thicker than that of the separator sheet part that does not face one end of the cathode sheet 100.

The separator sheet 305 according to the present embodiment may include a first separator sheet 305a located on one surface of the cathode sheet 100 and a second separator sheet 305b located on the other surface of the cathode sheet 100. The separator overlapping part 305P may include one end of the first separator sheet 305a formed by bending at least twice in the same direction so that the first separator sheet 305a covers the cut surface 100C of one end of the cathode sheet 100, and one end of the second separator sheet 305b that overlaps with one end of the first separator sheet 305a. Here, one end of the first separator sheet 305a may be formed by bending to cover the free-edge part 100A. One end of the first separator sheet 305a may be bent twice to cover the upper, side, and lower surfaces of the free-edge part 100A.

One end of the second separator sheet 305b may include a double layer by bending the end at least twice. Specifically, the second separator sheet 305b may be bent in a direction toward the first separator sheet 305a and bent again to overlap the portion where the first separator sheet 305a is bent. One end of the second separator sheet 305b may include two layers. According to the present embodiment, by forming a separator overlapping part 305P overlapped in triple layers between the cathode sheet 100 and the anode sheet 200, it is possible to physically prevent an internal short circuit between the anode sheet 200 and the cathode sheet 100.

Further, the slip layer 400 according to the present embodiment may include a separator substrate layer 400a and an adhesive layer 400b formed on one surface of the separator substrate layer 400a. The adhesive layer 400b may serve to attach the slip layer 400 to the anode sheet 200. The slip layer 400 may further include a backside coating layer 400c located on the back surface of the separator substrate layer 400a where the adhesive layer 400b is located. The backside coating layer 400c serves to prevent the adhesive layers 400b from adhering to each other when the slip layer 400 is wound in the form of a tape in the preparation process for attaching the slip layer 400 to the anode sheet 200.

The description of the slip layer 400 herein can be applied to the slip layer 400 previously described with reference to FIGS. 4 to 7.

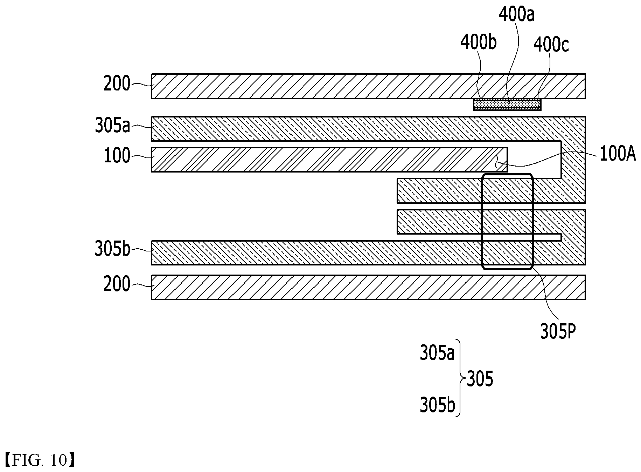

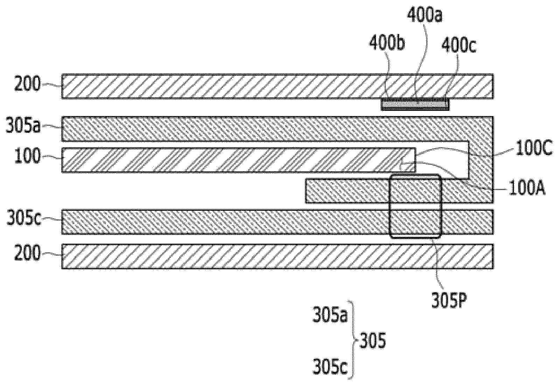

FIG. 10 is a diagram showing an electrode assembly according to yet another embodiment of the present disclosure.

The embodiment of FIG. 10 is mostly the same as the embodiment described with reference to FIG. 9, but the differences will be described below.

Referring to FIG. 10, the second separator sheet 305c may not be bent unlike the second separator sheet 305b described with reference to FIG. 9. In other words, the second separator sheet 305c according to the present embodiment can be overlapped with the first separator sheet 305a of FIG. 9 without bending one end. Therefore, in the separator overlapping part 305P according to the present embodiment, the double overlapping separator overlapping part 305P is formed between the cathode sheet 100 and the anode sheet 200, thereby being able to physically prevent an internal short between the anode sheet 200 and the cathode sheet 100.

In addition to the differences described above, all the contents described with reference to FIG. 9 are applicable to the present embodiment.

Meanwhile, the above-mentioned jelly roll type electrode assembly according to the present embodiment can be housed in a battery case to form a battery cell. Specifically, the jelly roll type electrode assembly can be manufactured into a battery cell by inserting it into a cylindrical or prismatic metal container, filling an electrolyte solution thereinto, and sealing the metal container. The battery cell including the jelly roll type electrode assembly may be a cylindrical battery or a prismatic battery, but the shape of the battery cell including the jelly roll type electrode assembly is not limited to the above examples.

Although the invention has been described in detail above with reference to preferred embodiments of the present disclosure, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: cathode sheet
100A: free-edge part
110: cathode tab
120: uncoated part
130: coating part
200: anode sheet
300: separator sheet
305: separator overlapping part
400: slip layer
400': barrier layer

## Claims

1. A jelly roll type electrode assembly comprising a cathode sheet, an anode sheet, and a separator sheet interposed between the cathode sheet and the anode sheet,
wherein a separator sheet part facing one end of the cathode sheet located on an inner side of the jelly roll type electrode assembly comprises a first separator sheet part facing the anode sheet and a second separator sheet part facing the cathode sheet, and
wherein a friction coefficient between the first separator sheet and the anode sheet is smaller than a friction coefficient between the second separator sheet and the cathode sheet.

2. The jelly roll type electrode assembly of claim 1, wherein:
one end of the cathode sheet is formed of a free-edge part containing an active material.

3. The electrode assembly of claim 2, wherein:
the free-edge part comprises a portion where one end of the cathode sheet is coated with a cathode active material onto the current collector.

4. The jelly roll type electrode assembly of claim 1, wherein:
one end of the anode sheet is located on the inner side of the jelly roll type electrode assembly than one end of the cathode sheet.

5. The jelly roll type electrode assembly of claim 1,
further comprising a slip layer located between the first separator sheet part and the anode sheet,
wherein a friction coefficient between the slip layer and the first separator sheet part or a friction coefficient between the slip layer and the anode sheet is smaller than a friction coefficient between the second separator sheet and the cathode sheet.

6. The jelly roll type electrode assembly of claim 5, wherein:
one end of the cathode sheet is formed of a free-edge part containing an active material, and
the slip layer is located on the first separator sheet part covering the free-edge part.

7. The jelly roll type electrode assembly of claim 6, wherein:
based on the cross section of the jelly roll type electrode assembly, the free-edge part is located between both ends of the slip layer.

8. The jelly roll type electrode assembly of claim 5, wherein:
a length of the slip layer is 10 mm to 30 mm.

9. The jelly roll type electrode assembly of claim 5, wherein:
the slip layer is made of a porous material.

10. The jelly roll type electrode assembly of claim 1,
further comprising a barrier layer located so as to face the free-edge part between the separator sheet and the cathode sheet.

11. The jelly roll type electrode assembly of claim 10, wherein:
the barrier layer is located on the second separator sheet part covering the free-edge part.

12. The jelly roll type electrode assembly of claim 11, wherein:
a friction coefficient between the barrier layer and the second separator sheet part or a friction coefficient between the barrier layer and the cathode sheet is greater than a friction coefficient between the first separator sheet part and the anode sheet.

13. The jelly roll type electrode assembly of claim 1,
further comprising a separator overlapping part formed on the separator sheet part overlapping with one end of the cathode sheet in a direction from the outside to the inside of the jelly roll type electrode assembly.

14. The electrode assembly of claim 13, wherein:
the separator overlapping part is formed between one end of the cathode sheet and the anode sheet, and the thickness of the separator overlapping part is formed thicker than that of the separator sheet part that does not face one end of the cathode sheet.

15. The jelly roll type electrode assembly of claim 14, wherein:
the separator sheet comprises a first separator sheet located on one surface of the cathode sheet and a second separator sheet located on the other surface of the cathode sheet, and
the separator overlapping part comprises one end of the first separator sheet formed by bending at least twice in the same direction so that the first separator sheet covers a cut surface of one end of the cathode sheet, and one end of the second separator sheet overlapping with one end of the first separator sheet.

16. The jelly roll type electrode assembly of claim 15, wherein:
one end of the second separator sheet includes a double layer by bending the end at least twice.

17. A battery cell comprising:
the jelly roll type electrode assembly of claim 1, and
a battery case housing the jelly roll type electrode assembly.

18. A cylindrical battery comprising the battery cell of claim 17.
